# EUROPEAN PATENT APPLICATION

(11) **EP 4 636 966 A1**
(43) Date of publication of application: **22.10.2025**
(21) Application number: 24382391.1
(22) Date of filing: 15.04.2024
(51) Int. Cl.: H02G 3/32

(54) **AIRCRAFT HARNESS HOLDING SYSTEM**

(71) Applicant: Airbus Defence and Space, S.A.U., 28906 Getafe - Madrid (ES)
(72) Inventor: Trapero Hidalgo, Francisco José, Getafe (ES); Navarredonda Gómez, Juan Manuel, Getafe (ES); Zarco Pernía, Javier, Getafe (ES); Lozano López, Alberto, Getafe (ES); Trapero Hidalgo, Francisco José, Getafe (ES)
(74) Representative: Elzaburu S.L.P.

(57) **Abstract**

Aircraft harness (6) holding system comprising a clamp (1) having a longitudinal direction configured to be parallel to a longitudinal direction of the harnesses (6) to be held and a transversal direction perpendicular to its longitudinal direction. The clamp (1) comprises a plurality of receiving elements (2), each receiving element (2) being configured to accommodate a longitudinal portion of at least a harness (6). The system further comprises a roller box (3) being configured to receive a longitudinal portion of the harnesses (6). The roller box (3) comprises rollers (4) so that the harnesses (6) are allowed to slide thereon along the longitudinal direction of the harness (6). The clamp (1) and the roller box (3) comprise means for their attachment to an aircraft structure.

## Description

### Field of the invention

The present invention relates to an aircraft harness holding system. Specifically, the invention is suitable for the boom mast of an aircraft refueling system.

### Background of the invention

A refueling boom mast comprises a telescopic tube assembly located on a tanker aircraft which plugs into a receptacle on a receiving aircraft.

The known refueling booms use aerodynamic control surfaces mounted on the refueling boom to move the boom throughout its operational envelope, e.g. up-down, side-to-side.

In order to mount the refueling boom to the tanker aircraft, various boom pivot configurations have been developed, e.g. alti-azimuth, canted axis, rolling axis. Thus, the boom is attached below the tail of the tanker with a joint. The boom operator can control the boom in pitch and roll by commanding the deflection of the control surfaces. He also commands the extension of the telescopic part of the boom mast to connect it with a refueling receptacle on the receiving aircraft.

It is also known the Roll-Pitch Joint System, which is a mechanism that joints the boom mast with the aircraft fuselage and allows its pitch and roll movements.

Through this Roll-Pitch Joint, several harnesses are routed with the aim of control and measure the boom mast. The challenge of this zone is that the boom is a movable component that has four different movements as previously stated.

Known solutions provide standard clamps to fix the harnesses. It results in every aircraft having a different harness arrangement.

During the operation of the refueling boom, harnesses are in motion, so there is a risk of collision between electrical parts and the aircraft structure. In addition, there is a special pass through which the harnesses must all pass together through a very narrow space where it is necessary to avoid contact with sharp structures surrounding the pass through. In the state of the art, the use of glued parts supporting the harnesses avoids collision with sharp structures of the aircraft. The glued parts are located in the lateral structure of the aircraft and at this location there is no aircraft structure to which these parts can be securely bolted, for example, and the glued parts sometimes get unglued. The problem comes when these parts are unglued due to movement or aircraft vibration.

Therefore, due to the pitch and roll movements and the lack of room in the area, harnesses installation becomes a challenge, and it is complicated to repeat the disposition of the harnesses in every aircraft using the known clamps.

### Summary of the invention

It is an object of the present invention an aircraft harness holding system. The harness holding system is of the kind that comprises a clamp having a longitudinal direction configured to be located parallel to the longitudinal direction of the harnesses to be held and a transversal direction perpendicular to the longitudinal direction.

The clamp comprises a plurality of receiving elements, each receiving element being configured to accommodate a longitudinal portion of at least a harness. In addition, the system further comprises a roller box receiving a longitudinal portion of the harnesses. The roller box comprises rollers so that the harnesses are allowed to slide thereon along the longitudinal direction of the harness. The clamp and the roller box comprise means for their attachment to an aircraft structure.

The clamp and the roller box guide the harnesses to avoid interference between harnesses and aircraft parts or other mechanical parts that could lead to wears, chaffing and damaged cables.

The harness holding system object of the invention makes it possible to easily fix the harnesses arrangement.

The clamp object of the invention allows to fix the path of every harness along the boom Roll-Pitch Joint thanks to the plurality of receiving elements that hold every harness.

The roller box is attached to the aircraft structure and therefore avoids any accidental dismount. It fixes the harnesses position through the small room available in the boom joint and allow harnesses to slide when the system is in motion due to the rollers.

It is also an object of the present invention a refueling boom mast joint of an aircraft that comprises a harness holding system according to the above.

### Description of the figures

To complete the description and to provide for a better understanding of the invention, drawings are provided. Said drawings form an integral part of the description and illustrate preferred embodiments of the invention. The drawings comprise the following figures.
Figure 1 shows a schematic representation of an embodiment of a roll-pitch joint and its harnesses. The figure also discloses an embodiment of a simple clamp, a double clamp and a roller box.
Figure 2 shows a schematic representation of the embodiment of the plurality of receiving elements and an embodiment of its joint to an outer part.

### Detailed description of the invention

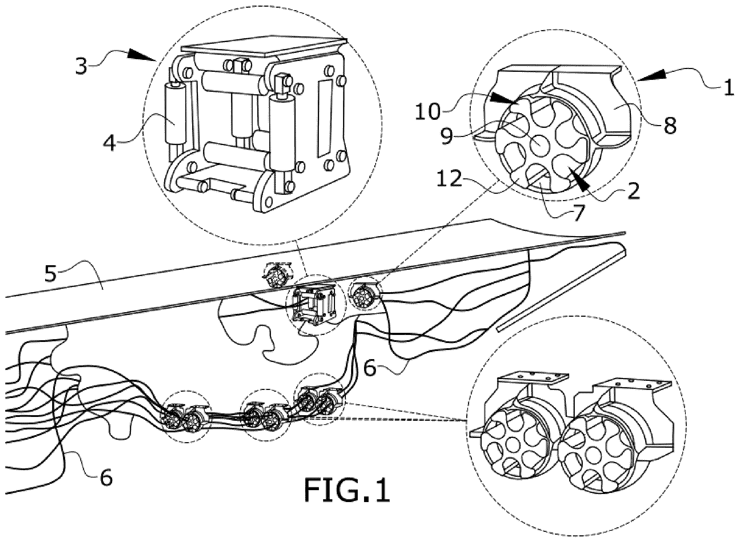

Figure 1 discloses a schematic representation of an embodiment of a refueling boom mast joint (5) and its harnesses (6). It also discloses an embodiment of a simple clamp (1), a double clamp (1) and a roller box (3) located into the roll-pitch joint area.

The clamp (1) comprises a plurality of receiving elements (2). Each receiving element (2) accommodates at least a harness (6).

The roller box (3) receives the harnesses (6) and it comprises rollers (4) so that the harnesses (6) are allowed to slide thereon along the longitudinal direction of the harness (6).

More specifically, the means for the attachment to an aircraft structure of the clamp (1) and of the roller box (3) are rivets.

The harness (6) holding system object of the invention makes it possible to fix the harness (6) disposition with the clamps (1) and roller box (3) riveted to aircraft structure instead of glued parts avoiding any accidental dismount.

In the shown embodiment, the clamp (1) comprises an inner part (10) comprising the plurality of receiving elements (2) and an outer part (8) surrounding the inner part (10) in a plane transversal to the clamp (1). The outer part (8) is the part that comprises the means for its attachment to the aircraft structure. More specifically, the outer part (8) comprises a flat surface which in use is located in an upper position so that it can be riveted to a structure of the aircraft.

In an embodiment, the outer part (8) is divided, in a transversal plane, into two elements so that they are located around the inner part (10) and are joined together after the harnesses (6) have been allocated on the receiving elements (2). In this way, the outer part (8) prevents the harnesses (6) from slipping out of the receiving elements (2).

In the embodiment shown in the figures, the inner part (10) comprises a plurality of cavities (7) opened towards the outer part (8) for receiving the harnesses (6) so that the harnesses (6) are transversely secured within the cavity (7) by the outer part (8). More particularly, the inner part (10) and the outer part (8) are circular in a transversal plane.

In the shown embodiment, the cavities (7) are narrower towards the outer part (8) to help retain the harness (6).

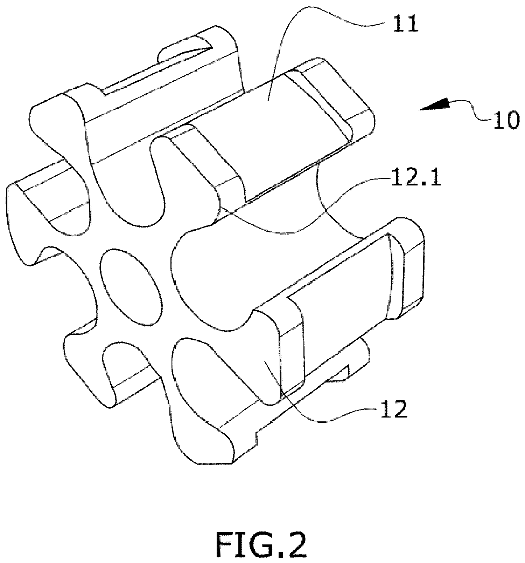

In the embodiment shown in figure 2 the inner part (10) and the outer part (8) comprise corresponding recesses (11) so as to avoid the longitudinal movement of the inner part (10) with respect to the outer part (8).

More specifically, the inner part (10) comprises separating elements (12) between consecutive cavities (7), the separating elements (12) comprise a free end (12.1) adjacent to the outer part (8). Said free end (12.1) comprises the corresponding recess (11) which comprises a stepped area in the longitudinal direction of the inner part (10).

In the shown embodiment, the inner part (10) comprises a central longitudinal hole (9) to alleviate the weight of the holding system.

Figure 1 also shows an embodiment in which the system comprises two clamps (1) located adjacent to each other in a transversal direction.

The roller box (3) shown in the figures comprises cylindrical rollers (4) located with their longitudinal axis configured to be located in a transversal direction to the harnesses (6) so that the harnesses (6) slide thereon when moving longitudinally.

In the shown embodiment, the roller box (3) comprises a square cross-section and comprises at least one roller (4) in each side of the square.

The function of the roller box (3) is to maintain the position of the harnesses (6) that pass through this very narrow area, avoiding friction with the aircraft structure, while at the same time enabling the movement of the harnesses (6) that occurs when the boom moves.

In an embodiment, the rollers (4) of the roller box (3) are made of nylon.

It is also an object of the present invention a refueling boom mast joint of an aircraft that comprises a harness holding system according to the above.

## Claims

1. Aircraft harness (6) holding system, comprising a clamp (1) having a longitudinal direction configured to be parallel to a longitudinal direction of the harnesses (6) to be held and a transversal direction perpendicular to its longitudinal direction, the system **characterised in that** the clamp (1) comprises a plurality of receiving elements (2), each receiving element (2) being configured to accommodate a longitudinal portion of at least a harness (6), the system further comprising a roller box (3) being configured to receive a longitudinal portion of the harnesses (6), the roller box (3) comprising rollers (4) so that the harnesses (6) are allowed to slide thereon along the longitudinal direction of the harness (6), the clamp (1) and the roller box (3) comprising means for their attachment to an aircraft structure.

2. Aircraft harness (6) holding system, according to claim 1, wherein the means for the attachment to an aircraft structure of the clamp (1) and of the roller box (3) are rivets.

3. Aircraft harness (6) holding system, according to claim 1 or 2, wherein the clamp (1) comprises an inner part (10) comprising the plurality of receiving elements (2) and an outer part (8) surrounding the inner part (10) in a plane transversal to the clamp (1), the outer part (8) comprising the means for its attachment to an aircraft structure.

4. Aircraft harness (6) holding system, according to claim 3, wherein the inner part (10) comprises a plurality of cavities (7) opened towards the outer part (8) for receiving the harnesses (6) so that the harnesses (6) are transversely secured within the cavity (7) by the outer part (8).

5. Aircraft harness (6) holding system, according to any preceding claim 3 or 4, wherein the inner part (10) and the outer part (8) are circular in a transversal plane.

6. Aircraft harness (6) holding system, according to any preceding claim 3 to 5, wherein the outer part (8) is divided in a transversal plane into two elements that are joined together.

7. Aircraft harness (6) holding system, according to any preceding claim 4 to 6, wherein the cavities (7) are narrower towards the outer part (8) to help retain the harness (6).

8. Aircraft harness (6) holding system, according to any preceding claim 3 to 7, wherein the inner part (10) and the outer part (8) comprise corresponding recesses (11) so as to avoid the longitudinal movement of the inner part (10) with respect to the outer part (8).

9. Aircraft harness (6) holding system, according to claim 8 and to any preceding claim 4 to 7, wherein the inner part (10) comprises separating elements (12) between consecutive cavities (7), the separating elements (12) comprising a free end (12.1) adjacent to the outer part (8), the free end (12.1) comprising the corresponding recesses (11) having a stepped area in the longitudinal direction of the inner part (10).

10. Aircraft harness (6) holding system, according to any preceding claim, wherein the system comprises two clamps (1) located adjacent to each other in a transversal direction.

11. Aircraft harness (6) holding system, according to any preceding claim, wherein the roller box (3) comprises cylindrical rollers (4) located with their longitudinal axis configured to be located in a transversal direction to the harnesses (6) so that the harnesses (6) slide thereon when moving longitudinally.

12. Aircraft harness (6) holding system, according to claim 11, wherein the roller box (3) comprises a square section in the transversal direction, and it comprises at least one roller (4) in each side of the square.

13. Aircraft harness (6) holding system, according to any preceding claim, wherein the rollers (4) of the roller box (3) are made of nylon.

14. Refueling boom mast joint (5) of an aircraft, **characterized in that** it comprises a harness (6) holding system according to any preceding claim.
